# EUROPÄISCHE PATENTSCHRIFT

(11) **EP 3 618 017 B1**
(45) Veröffentlichungstag und Bekanntmachung des Hinweises auf die Patenterteilung: **27.12.2023**
(21) Anmeldenummer: 19192499.2
(22) Anmeldetag: 20.08.2019
(51) Int. Cl.: G07C 9/37, G06V 10/147, G06V 40/16, G06V 40/60

(54) **ZUGANGSKONTROLLSYSTEM ZUM ERFASSEN EINES GESICHTSBILDES EINER PERSON**
ACCESS CONTROL SYSTEM FOR CAPTURING A FACIAL IMAGE OF A PERSON
SYSTÈME DE CONTRÔLE D'ACCÈS PERMETTANT DE CAPTURER UNE IMAGE FACIALE D'UNE PERSONNE

(30) Priorität: 30.08.2018 DE 102018121256
(43) Veröffentlichungstag der Anmeldung: 04.03.2020
(73) Patentinhaber: Bundesdruckerei GmbH, 10969 Berlin (DE)
(72) Erfinder: HERRMANN, Klaus, 30625 Hannover (DE); HESSE, Holger, 30655 Hannover (DE); MAGGIONI, Christoph, 10961 Berlin (DE); RABELER, Uwe, 30453 Hannover (DE); THATER, Marcel, 30952 Ronnenberg (DE); WOLF, Andreas, 13158 Berlin (DE)
(74) Vertreter: Patentship Patentanwaltsgesellschaft mbH

(56) Entgegenhaltungen:
- EP-A2- 1 126 403
- EP-A2- 2 355 007
- DE-A1-102011 079 285
- DE-B3-102010 011 225
- DE-B4-102004 042 999
- JP-A- H1 149 457
- US-A1- 2005 063 566

## Beschreibung

Die vorliegende Erfindung betrifft das Gebiet der Gesichtsbilderfassung einer Person innerhalb eines Zugangsbereichs, beispielsweise an einem Grenzkontrollpunkt.

Die Offenlegungsschrift JP H 11 49 457 A offenbart einen Fahrstuhl mit einer Kabine.

Die Offenlegungsschrift DE 10 2011 079 285 A1 offenbart eine Vorrichtung zur Erfassung biometrischer Merkmale.

Die Offenlegungsschrift US 2005/063566 A1 offenbart ein System zum Erfassen eines Gesichtsbildes.

Die Offenlegungsschrift EP 1 126 403 A2 offenbart ein System zum Erfassen eines Irisbildes.

Die Druckschrift DE 10 2010 011225 B3 offenbart eine Personendurchgangskontrolle mit einem Kamerasystem.

Die Druckschrift DE 10 2004 042999 B4 offenbart eine Vorrichtung und ein Verfahren zum Prüfen einer Zugangsberechtigung zu einem geschützten Bereich.

Die Druckschrift DE 2 355 007 A2 offenbart ein System und ein Verfahren zur dreidimensionalen Objektvermessung.

Grenzkontrollen von Personen erfolgen üblicherweise manuell an einem Grenzkontrollpunkt, an dem sich die reisenden Personen anstellen und anschließend einzeln oder gemeinsam mit weiteren Personen, beispielsweise als Paar oder als Familie, abgefertigt werden. Ferner kann eine automatisierte Abfertigung durch ein automatisiertes Zugangskontrollsystem, beispielsweise ein Automated Border Control (ABC) Gate erfolgen.

Um zu erfassen, welche Personen einen bestimmten Zugangsbereich passiert haben, und um dies beispielsweise in einer Datenbank einzutragen, können beispielsweise Passdaten aus einer maschinenlesbaren Zone (engl. Machine-Readable-Zone, MRZ) verwendet werden. Auf diese Weise können die Bewegungen eines Passes nachverfolgt werden; nicht jedoch die Bewegungen von Personen. Ferner führt ein Wechsel bzw. Verlust des Passe zugleich zu einem Verlust der Nachverfolgungsmöglichkeit.

Alternativ können biometrische Merkmale von Personen, beispielsweise Gesichtsbilder der Personen, erfasst werden. Bei einem automatisierten Zugangskontrollsystem kann dies beispielsweise automatisch beim Durchgang der Personen durch das Zugangskontrollsystem geschehen.

Häufig werden Gesichtsbilder von Personen bei derartigen Zugangskontrollsystemen jedoch mittels manuell ausgerichteter Webcams auf Tresen erfasst, welche beispielsweise durch einen Grenzbeamten erst auf das Gesicht der jeweiligen Personen ausgerichtet werden müssen. Bei derart erfassten Gesichtsbildern ist die Entfernung praktisch häufig zu kurz, die Pose der Person selten frontal, und die Beleuchtung zumeist zufällig.

Es existieren auch Zutrittskontrollsysteme, bei denen ein fest installierter Bildsensor schräg hinter einem Grenzbeamten angeordnet ist. Bei derart erfassten Gesichtsbildern kann die Entfernung zwar passen, und die Beleuchtung entsprechend ausgerichtet werden. Der Grenzbeamte kann dabei jedoch potentiell im Weg stehen, wodurch eine Erfassung der Gesichtsbilder erschwert werden kann. Ferner kann durch den Blickwinkel des Bildsensors der Strahlengang zwischen dem Bildsensor und dem Gesicht der Person möglicherweise auf eine Glasscheibe vor dem Grenzkontrollpunkt, eine Querleiste, oder eine andere bauliche Gegebenheiten treffen. Dies ist häufig mit einer reduzierten Qualität der erfassten Gesichtsbilder verbunden.

Es ist daher eine Aufgabe der vorliegenden Erfindung, ein effizientes Konzept zum Erfassen eines Gesichtsbildes einer Person innerhalb eines Zugangsbereichs zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe dadurch gelöst werden kann, dass die Erfassung des Gesichtsbildes der Person innerhalb des Zugangsbereiches unter Verwendung eines Spiegels erfolgt, welcher in einem Sichtbereich eines Bildsensors angeordnet ist. Der Bildsensor zur Erfassung des Gesichtsbildes ist dabei an einem Deckenelement angeordnet, welches den Zugangsbereich begrenzt. Dadurch, dass der Spiegel zu dem Bildsensor derart ausgerichtet ist, dass das Gesicht der Person innerhalb des Zugangsbereichs über den Spiegel durch den Bildsensor erfassbar ist, kann eine effiziente Erfassung des Gesichtsbildes erfolgen.

Zusammenfassend wird erreicht, dass das Zugangskontrollsystem kompakt aufgebaut werden kann, und zugleich die Qualität der erfassten Gesichtsbilder gesteigert werden kann. Gemäß einem ersten Aspekt betrifft die Erfindung ein Zugangskontrollsystem zum Erfassen eines Gesichtsbildes einer Person innerhalb eines Zugangsbereichs gemäß Anspruch 1.

Die Ausrichtung des Spiegels zu dem Bildsensor kann beispielsweise unter Verwendung geometrischer Grundprinzipen der Strahlenoptik bestimmt werden. Insbesondere kann die Ausrichtung des Spiegels unter Berücksichtigung der Spiegelreflektion bestimmt werden. Dabei kann ein vorbekannter Teilbereich des Zugangsbereiches berücksichtigt werden, in welchem sich die Person typischerweise aufhält bzw. sich das Gesicht der Person typischerweise befindet.

Gemäß einer Ausführungsform weist der Spiegel eine planare Spiegelform auf. Dadurch wird der Vorteil erreicht, dass eine optische Verzerrung des Gesichtes in dem erfassten Gesichtsbild reduziert werden kann.

Gemäß einer Ausführungsform weist der Spiegel eine konvexe Spiegelform auf. Dadurch wird der Vorteil erreicht, dass das Zugangskontrollsystem besonders kompakt aufgebaut werden kann. Durch die bewirkte optische Verzerrung kann ferner ein größerer Teil des Zugangsbereichs durch den Spiegel abgebildet werden.

Gemäß einer Ausführungsform weist der Spiegel eine zylindrisch konvexe Spiegelform auf. Dadurch wird der Vorteil erreicht, dass die bewirkte optische Verzerrung besonders einfach vorab bestimmt werden kann.

Gemäß einer Ausführungsform umfasst das Zugangskontrollsystem eine Entzerrungseinrichtung, welche ausgebildet ist, das erfasste Gesichtsbild der Person optisch zu entzerren. Dadurch wird der Vorteil erreicht, dass eine optische Verzerrung aufgrund der konvexen Spiegelform effizient entzerrt werden kann.

Durch die vorbekannte Anordnung des Spiegels relativ zu dem Bildsensor, und die vorbekannte Spiegelform, kann die bewirkte optische Verzerrung vorab bestimmt werden, wodurch eine entsprechende optische Entzerrung des erfassten Gesichtsbildes durch die Entzerrungseinrichtung erfolgen kann.

Gemäß einer Ausführungsform umfasst der Bildsensor ein optisches Element, wobei das optische Element ausgebildet ist, den Sichtbereich des Bildsensors auf den Spiegel zu fokussieren. Dadurch wird der Vorteil erreicht, dass das Auflösungsvermögen des Bildsensors vollständig zur Erfassung des Gesichtsbildes verwendet werden kann.

Gemäß einer Ausführungsform umfasst das optische Element eine Linse oder ein Objektiv. Dadurch wird der Vorteil erreicht, dass das optische Element einfach realisiert werden kann. Gemäß einer Ausführungsform umfasst das Zugangskontrollsystem einen teil-durchlässigen Spiegel, welcher zwischen dem Bildsensor und dem Spiegel angeordnet ist. Dadurch wird der Vorteil erreicht, dass die Person bei einem Blick in den Spiegel ihr eigenes Spiegelbild sieht, und zugleich eine Erfassung des Gesichtsbildes der Person durch den Bildsensor möglich ist. Dadurch kann beispielsweise der Komfort für die Person gesteigert werden. Gemäß einer Ausführungsform verlaufen eine lotrechte Achse des Deckenelementes und eine optische Achse des Bildsensors parallel zueinander. Die optische Achse des Bildsensors kann somit beispielsweise in vertikaler Richtung auf den Spiegel ausgerichtet sein. Dadurch wird der Vorteil erreicht, dass das Zugangskontrollsystem besonders kompakt aufgebaut werden kann.

Erfindungsgemäß umfasst das Zugangskontrollsystem ein Halteelement, welches ein Tresen ist, an welchem der Spiegel angeordnet ist. Dadurch wird der Vorteil erreicht, dass das Zugangskontrollsystem einfach realisiert werden kann.

Gemäß einer Ausführungsform ist der Spiegel an einer Oberseite des Haltelementes angeordnet. Dadurch wird der Vorteil erreicht, dass der Zugangsbereich besonders einfach durch den Spiegel abgebildet werden kann.

Gemäß einer Ausführungsform umfasst das Zugangskontrollsystem eine Auslöseeinrichtung, welche ausgebildet ist, eine Blickrichtung der Person zu erkennen, insbesondere auf der Basis einer Mustererkennung, und eine Erfassung des Gesichtsbildes durch den Bildsensor auszulösen, wenn die Blickrichtung der Person zu dem Spiegel hin gewandt ist. Dadurch wird der Vorteil erreicht, dass das Gesichtsbild der Person in frontaler Pose einfach erfasst werden kann.

Gemäß einer Ausführungsform ist der Spiegel schwenkbar. Dadurch wird der Vorteil erreicht, dass eine Ausrichtung des Spiegels einfach verändert werden kann.

Gemäß einer Ausführungsform umfasst das Zugangskontrollsystem eine Positionserfassungseinrichtung, welche ausgebildet ist, eine Position der Person, insbesondere des Gesichts der Person, innerhalb des Zugangsbereiches zu erfassen, und eine Einstellungseinrichtung, welche ausgebildet ist, eine Ausrichtung des Spiegels in Abhängigkeit von der erfassten Position derart einzustellen, dass das Gesicht der Person durch den Bildsensor erfassbar ist. Dadurch wird der Vorteil erreicht, dass sich die Person an unterschiedlichen Positionen innerhalb des Zugangsbereiches zur Erfassung des Gesichtsbildes befinden kann.

Gemäß einer Ausführungsform umfasst das Zugangskontrollsystem einen Signalgeber, welcher ausgebildet ist, ein optisches Signal oder ein akustisches Signal in Richtung der Person auszugeben. Dadurch wird der Vorteil erreicht, dass die Person zu einer Veränderung der Blickrichtung veranlasst werden kann. Der Signalgeber kann als Attraktor für die Person aufgefasst werden.

Erfindungsgemäß umfasst das Zugangskontrollsystem eine Identifizierungseinrichtung, welche ausgebildet ist, das Gesichtsbild der Person mit einem Referenzgesichtsbild der Person zu vergleichen, um die Person zu identifizieren. Dadurch wird der Vorteil erreicht, dass eine effiziente Identifizierung der Person erfolgen kann.

Gemäß einem zweiten Aspekt betrifft die Erfindung ein Zugangskontrollverfahren zum Erfassen eines Gesichtsbildes einer Person innerhalb eines Zugangsbereichs gemäß Anspruch 13.

Das Zugangskontrollverfahren kann durch das Zugangskontrollsystem ausgeführt werden. Weitere Merkmale des Zugangskontrollverfahrens resultieren unmittelbar aus den Merkmalen und/oder der Funktionalität des Zugangskontrollsystems.

Ferner wird ein Computerprogramm mit einem Programmcode zum Ausführen des Zugangskontrollverfahrens dargestellt. Das Zugangskontrollsystem kann programmtechnisch eingerichtet sein, um den Programmcode auszuführen.

Weitere Ausführungsbeispiele werden Bezug nehmend auf die beiliegenden Zeichnungen näher erläutert. Es zeigen:
- Fig. 1: ein schematisches Diagramm eines Zugangskontrollsystems zum Erfassen eines Gesichtsbildes einer Person innerhalb eines Zugangsbereichs; und
- Fig. 2: ein schematisches Diagramm eines Zugangskontrollverfahrens zum Erfassen eines Gesichtsbildes einer Person innerhalb eines Zugangsbereichs.

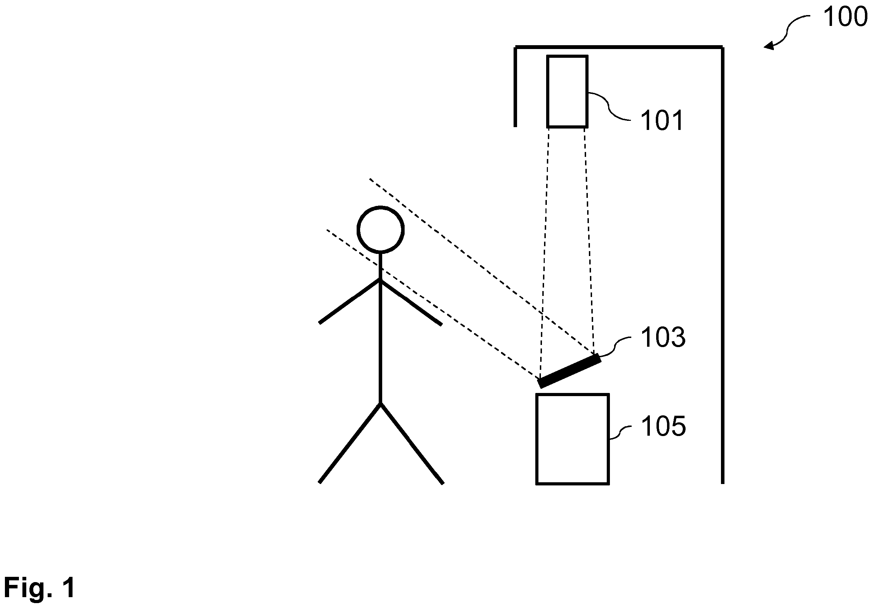

Fig. 1 zeigt ein schematisches Diagramm eines Zugangskontrollsystems 100 zum Erfassen eines Gesichtsbildes einer Person innerhalb eines Zugangsbereichs, welcher durch ein Deckenelement begrenzt ist.

Das Zugangskontrollsystem 100 umfasst einen Bildsensor 101, welcher an dem Deckenelement angeordnet ist. Das Zugangskontrollsystem 100 umfasst ferner einen Spiegel 103, welcher in einem Sichtbereich des Bildsensors 101 angeordnet ist, wobei der Spiegel 103 zu dem Bildsensor 101 derart ausgerichtet ist, dass ein Gesicht der Person innerhalb des Zugangsbereichs über den Spiegel 103 durch den Bildsensor 101 erfassbar ist. Der Bildsensor 101 ist ausgebildet, das Gesichtsbild der Person innerhalb des Zugangsbereichs zu erfassen. Das Zugangskontrollsystem 100 kann ferner ein Halteelement 105, insbesondere einen Tresen, umfassen, an welchem der Spiegel 103 angeordnet ist. Der Spiegel 103 kann beispielsweise an einer Oberseite des Haltelementes 105 angeordnet sein.

Durch das Zugangskontrollsystem 100 kann das Gesichtsbild der Person derart erfasst werden, dass die Umgebungsbedingungen, insbesondere hinsichtlich der Entfernung und Lichtverhältnisse, passend sind. Die Anordnung der Komponenten des Zugangskontrollsystems 100 ist für eine Vielzahl baulicher Bedingungen, beispielsweise an einem Grenzkontrollpunkt, geeignet. Ferner werden etwaige Grenzbeamte nicht behindert, und müssen nicht umfänglich mit der Person interagieren. Ferner kann die Benutzung für die Person intuitiv sein.

Das Zutrittskontrollsystem 100 kann vielfältig ausgestaltet sein. Insbesondere kann das Halteelement 105 mit dem Spiegel 103 frontal oder seitlich zur Person angeordnet sein. Das Halteelement 105 mit dem Spiegel 103 kann sich beispielsweise zwischen der Person und einem etwaigen Grenzbeamten befinden. Ferner kann eine Glasscheibe vorgesehen sein.

Das Zugangskontrollsystem 100 erlaubt eine Erfassung des Gesichtsbildes der Person mit guter Qualität. Insbesondere kann ein ausreichender Abstand zwischen dem Gesicht der Person und dem Bildsensor 101 gewährleistet werden. Dies ist besonders vorteilhaft für 1:N-Vergleichsanwendungen wie bei Entry-Exit-Anwendungen oder für manuelle Vergleiche.

Aber auch 1:1-Vergleichsanwendungen können von dem Konzept profitieren. Ferner können etwaige Kompromisse hinsichtlich der Qualität der erfassten Gesichtsbilder aufgrund der typischen Umgebungsbedingungen, insbesondere betreffend den Bildhintergrund und die Lichtverhältnisse, durch das Konzept ausgeglichen werden.

In dem Zugangskontrollsystem 100 kann eine große Entfernung zwischen dem Bildsensor 101 und der Person gewährleistet werden. Ferner kann gewährleistet werden, dass sich ein etwaiger Grenzbeamter nicht im Sichtbereich des Bildsensors 101 befindet. Dadurch, dass der Bildsensor 101 an dem Deckenelement angeordnet ist, kann eine Behinderung bzw. Störung der Personen durch den Bildsensor 101 verhindert werden. Ferner kann der Strahlengang des Bildsensors 101 derart geführt werden, dass dieser frei von Beeinträchtigungen verläuft. Der Strahlengang kann beispielsweise unmittelbar über dem Halteelement 105 frei sein.

Zusammenfassend kann der Bildsensor 101 derart an dem Deckenelement angebracht werden, dass der Bildsensor 101 von oben auf das Halteelement 105 ausgerichtet ist. In der Höhe des Halteelements 105 kann der Spiegel 103 angebracht werden, über welchen der Strahlengang des Bildsensors 101 derart umgelenkt wird, dass das Gesicht der Person erfasst werden kann. Der Spiegel 103 kann ferner in das Halteelement 105 eingelassen sein. Der Spiegel 103 kann schwenkbar sein, um eine Ausrichtung des Spiegels 103 zu verändern. Beispielsweise kann der Spiegel 103 manuell oder motorgesteuert schwenkbar sein. Der Spiegel 103 kann insbesondere horizontal schwenkbar sein, um dadurch Gesichtsbilder verschieden großer Personen zu erfassen.

Die Person kann beispielsweise schräg nach unten blicken, wodurch seine Pose zwar nicht genau frontal ist. Durch eine geeignete Neigung des Kopfes kann die Pose der frontalen Pose jedoch sehr nahe kommen.

Der Spiegel 103 kann eine planare Spiegelform aufweisen. Der Spiegel 103 kann aber auch eine konvexe Spiegelform, insbesondere eine zylindrisch konvexe Spiegelform, aufweisen.

Die zylindrisch konvexe Spiegelform kann horizontal konvex zylindrisch sein. Durch die konvexe Spiegelform können beispielsweise unterschiedlich große Personen ohne eine Veränderung der Ausrichtung des Spiegels 103 effizient erfasst werden.

Die optische Verzerrung durch eine etwaige konvexe Spiegelform kann mittels einer Entzerrungseinrichtung nach der Erfassung des Gesichtsbildes der Person ausgeglichen werden. Alternativ oder zusätzlich kann die optische Entzerrung optisch erfolgen, beispielsweise mittels einer Linse oder eines weiteren Spiegels.

Zwischen dem Bildsensor 101 und dem Spiegel 103 kann sich ferner ein teil-durchlässiger Spiegel befinden, in welchem sich die Person bei Blick in den Spiegel 103 selbst sehen kann, um die Pose selbst zu korrigieren.

Zudem kann ein Signalgeber vorgesehen sein, welcher als Attraktor für die Person dienen kann. Da Personen erfahrungsgemäß ohnehin häufig auf einen Tresen als Halteelement 105 blicken, kann mittels des Signalgebers, beispielsweise in Form eines Lichtkranzes um den Spiegel 103, der Blick der Personen besonders einfach auf den Spiegel 103 gelenkt werden. Ein Eingreifen eines Grenzbeamten wird dabei nur selten erfolgen.

Durch die vorbekannte Anordnung der Komponenten des Zugangskontrollsystems 100 kann auch eine geeignete Beleuchtung bereitgestellt werden. Insbesondere bei Flughäfen, bei denen die Beleuchtung kontrolliert werden kann, ist mit einer entsprechenden Beleuchtung zu rechnen. Beispielsweise kann eine geeignete Vordergrundbeleuchtung bereitgestellt werden, welche die Grenzbeamten nicht behindert, eine homogene Beleuchtung der Gesichter ohne störende Reflektionen auf Brillen ermöglicht, und die Personen nicht blendet.

Die Anordnung des Bildsensors 101 und des Spiegels 103 kann entsprechend auf eine Anordnung mit mehreren Bildsensoren und mehreren Spiegeln angewendet werden. Beispielsweise können hierdurch mehrere Gesichtsbilder mehrerer Personen zeitgleich erfasst werden.

Die erfassten Gesichtsbilder haben somit eine hohe Qualität. Zudem ist der Vorgang der Erfassung der Gesichtsbilder einfach und ist zugleich mit einer reduzierten Interaktion seitens der Grenzbeamten verbunden.

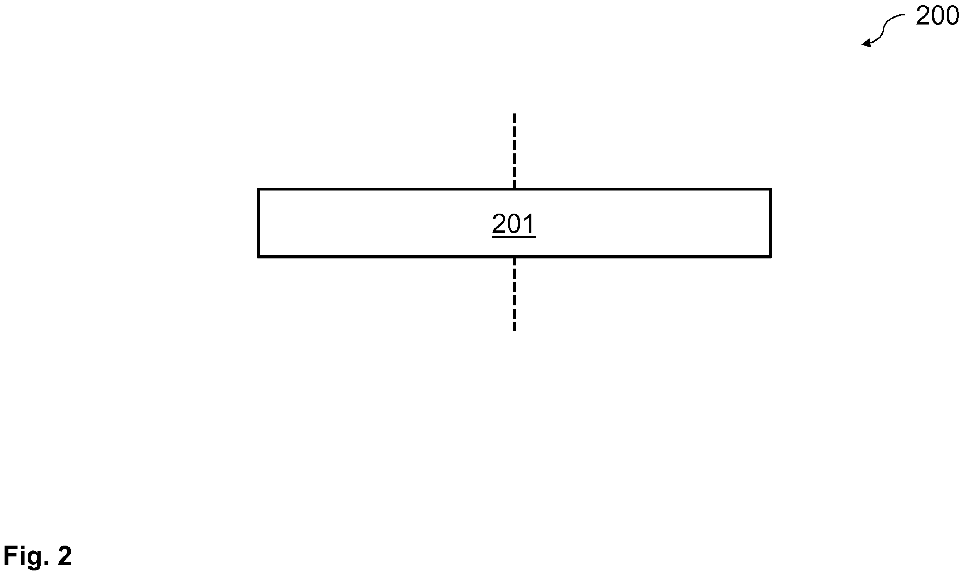

Fig. 2 zeigt ein schematisches Diagramm eines Zugangskontrollverfahrens 200 zum Erfassen eines Gesichtsbildes einer Person innerhalb eines Zugangsbereichs, welcher durch ein Deckenelement begrenzt ist. Ein Bildsensor ist an dem Deckenelement angeordnet. Ein Spiegel ist in einem Sichtbereich des Bildsensors angeordnet, wobei der Spiegel zu dem Bildsensor derart ausgerichtet ist, dass ein Gesicht der Person innerhalb des Zugangsbereichs über den Spiegel durch den Bildsensor erfassbar ist.

Das Zugangskontrollverfahren 200 umfasst ein Erfassen 201 des Gesichtsbildes der Person innerhalb des Zugangsbereichs durch den Bildsensor.

Das Zugangskontrollverfahren 200 kann mittels eines Computerprogramms mit einem Programmcode ausgeführt werden.

Alle in Verbindung mit einzelnen Ausführungsformen gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Zugangskontrollsystem
- 101: Bildsensor
- 103: Spiegel
- 105: Halteelement
- 200: Zugangskontrollverfahren
- 201: Erfassen

## Patentansprüche

1. Zugangskontrollsystem (100) zum Erfassen eines Gesichtsbildes einer Person innerhalb eines Zugangsbereichs, welcher durch ein Deckenelement begrenzt ist, mit:
einem Bildsensor (101), welcher an dem Deckenelement angeordnet ist; und
einem Spiegel (103), welcher in einem Sichtbereich des Bildsensors (101) angeordnet ist,
wobei der Spiegel (103) zu dem Bildsensor (101) derart ausgerichtet ist, dass ein Gesicht der Person innerhalb des Zugangsbereichs über den Spiegel (103) durch den Bildsensor (101) erfassbar ist;
wobei der Bildsensor (101) ausgebildet ist, das Gesichtsbild der Person innerhalb des Zugangsbereichs zu erfassen,
einer Identifizierungseinrichtung, welche ausgebildet ist, das Gesichtsbild der Person mit einem Referenzgesichtsbild der Person zu vergleichen, um die Person zu identifizieren, und
einem Halteelement, welches ein Tresen ist, an welchem der Spiegel (103) angeordnet ist, wobei der Bildsensor (101) derart an dem Deckenelement angebracht ist, dass der Bildsensor (101) von oben auf das Halteelement ausgerichtet ist, wobei in der Höhe des Halteelements der Spiegel (103) angebracht ist, über welchen der Strahlengang des Bildsensors (101) derart umgelenkt wird, dass das Gesicht der Person erfasst werden kann.

2. Zugangskontrollsystem (100) nach Anspruch 1, wobei der Spiegel (103) eine planare Spiegelform aufweist.

3. Zugangskontrollsystem (100) nach Anspruch 1, wobei der Spiegel (103) eine konvexe Spiegelform aufweist.

4. Zugangskontrollsystem (100) nach Anspruch 3, wobei der Spiegel (103) eine zylindrisch konvexe Spiegelform aufweist.

5. Zugangskontrollsystem (100) nach einem der Ansprüche 3 oder 4, mit:
einer Entzerrungseinrichtung, welche ausgebildet ist, das erfasste Gesichtsbild der Person optisch zu entzerren.

6. Zugangskontrollsystem (100) nach einem der vorstehenden Ansprüche, wobei der Bildsensor (101) ein optisches Element umfasst, wobei das optische Element ausgebildet ist, den Sichtbereich des Bildsensors (101) auf den Spiegel (103) zu fokussieren.

7. Zugangskontrollsystem (100) nach Anspruch 6, wobei das optische Element eine Linse oder ein Objektiv umfasst.

8. Zugangskontrollsystem (100) nach einem der vorstehenden Ansprüche, mit:
einem teil-durchlässigen Spiegel, welcher zwischen dem Bildsensor (101) und dem Spiegel (103) angeordnet ist.

9. Zugangskontrollsystem (100) nach einem der vorstehenden Ansprüche, wobei eine lotrechte Achse des Deckenelementes und eine optische Achse des Bildsensors (101) parallel zueinander verlaufen.

10. Zugangskontrollsystem (100) nach einem der vorstehenden Ansprüche, mit:
einer Auslöseeinrichtung, welche ausgebildet ist, eine Blickrichtung der Person zu erkennen, insbesondere auf der Basis einer Mustererkennung, und eine Erfassung des Gesichtsbildes durch den Bildsensor (101) auszulösen, wenn die Blickrichtung der Person zu dem Spiegel (103) hin gewandt ist.

11. Zugangskontrollsystem (100) nach einem der vorstehenden Ansprüche, mit:
einer Positionserfassungseinrichtung, welche ausgebildet ist, eine Position der Person, insbesondere des Gesichts der Person, innerhalb des Zugangsbereiches zu erfassen; und
einer Einstellungseinrichtung, welche ausgebildet ist, eine Ausrichtung des Spiegels (103) in Abhängigkeit von der erfassten Position derart einzustellen, dass das Gesicht der Person durch den Bildsensor (101) erfassbar ist.

12. Zugangskontrollsystem (100) nach einem der vorstehenden Ansprüche, mit:
einem Signalgeber, welcher ausgebildet ist, ein optisches Signal oder ein akustisches Signal in Richtung der Person auszugeben.

13. Zugangskontrollverfahren (200) zum Erfassen eines Gesichtsbildes einer Person innerhalb eines Zugangsbereichs, welcher durch ein Deckenelement begrenzt ist, wobei ein Bildsensor (101) an dem Deckenelement angeordnet ist, wobei ein Spiegel (103) in einem Sichtbereich des Bildsensors (101) angeordnet ist, wobei der Spiegel (103) zu dem Bildsensor (101) derart ausgerichtet ist, dass ein Gesicht der Person innerhalb des Zugangsbereichs über den Spiegel (103) durch den Bildsensor (101) erfassbar ist, wobei eine Identifizierungseinrichtung vorgesehen ist, welche ausgebildet ist, das Gesichtsbild der Person mit einem Referenzgesichtsbild der Person zu vergleichen, um die Person zu identifizieren, wobei ein Halteelement vorgesehen ist, welches ein Tresen ist, an welchem der Spiegel (103) angeordnet ist, wobei der Bildsensor (101) derart an dem Deckenelement angebracht ist, dass der Bildsensor (101) von oben auf das Halteelement ausgerichtet ist, wobei in der Höhe des Halteelements der Spiegel (103) angebracht ist, über welchen der Strahlengang des Bildsensors (101) derart umgelenkt wird, dass das Gesicht der Person erfasst werden kann, mit:
Erfassen (201) des Gesichtsbildes der Person innerhalb des Zugangsbereichs durch den Bildsensor (101),
Vergleichen des Gesichtsbilds der Person mit einem Referenzgesichtsbild der Person durch die Identifizierungseinrichtung, um die Person zu identifizieren.

## Claims

1. Access control system (100) for capturing a facial image of a person within an access area, which is delimited by a ceiling element, the access control system (100) comprising:
an image sensor (101), which is arranged on the ceiling element; and
a mirror (103), which is arranged in a viewing area of the image sensor (101), wherein the mirror (103) is aligned with the image sensor (101) such that a face of the person within the access area is capturable via the mirror (103) by the image sensor (101);
wherein the image sensor (101) is configured to capture the facial image of the person within the access area,
an identification device, which is configured to compare the facial image of the person with a reference facial image of the person in order to identify the person, and
a holding element, which is a counter on which the mirror (103) is arranged,
wherein the image sensor (101) is attached to the ceiling element such that the image sensor (101) is aligned from above to the holding element, wherein the mirror (103) is attached at the height of the holding element, via which mirror (103) the beam path of the image sensor (101) is redirected such that the face of the person is capturable.

2. Access control system (100) according to claim 1, wherein the mirror (103) has a planar mirror shape.

3. Access control system (100) according to claim 1, wherein the mirror (103) has a convex mirror shape.

4. Access control system (100) according to claim 3, wherein the mirror (103) has a cylindrically convex mirror shape.

5. Access control system (100) according to one of claims 3 or 4, comprising:
an equalization device, which is configured to optically equalize the captured facial image of the person.

6. Access control system (100) according to one of the preceding claims, wherein the image sensor (101) comprises an optical element, wherein the optical element is configured to focus the viewing area of the image sensor (101) on the mirror (103).

7. Access control system (100) according to claim 6, wherein the optical element comprises a lens or an objective.

8. Access control system (100) according to one of the preceding claims, comprising:
a partially transparent mirror, which is arranged between the image sensor (101) and the mirror (103).

9. Access control system (100) according to one of the preceding claims, wherein a perpendicular axis of the ceiling element and an optical axis of the image sensor (101) run parallel to one another.

10. Access control system (100) according to one of the preceding claims, comprising:
a triggering device, which is configured to detect a viewing direction of the person, in particular on the basis of a pattern detection, and to trigger a capture of the facial image by the image sensor (101) when the viewing direction of the person is directed towards the mirror (103).

11. Access control system (100) according to one of the preceding claims, comprising:
a position detection device, which is configured to detect a position of the person, in particular the face of the person, within the access area; and
an adjustment device, which is configured to adjust an orientation of the mirror (103) depending on the detected position such that the face of the person is capturable by the image sensor (101).

12. Access control system (100) according to one of the preceding claims, comprising:
a signal generator, which is configured to emit an optical signal or an acoustic signal in the direction of the person.

13. Access control method (200) for capturing a facial image of a person within an access area, which is delimited by a ceiling element, wherein an image sensor (101) is arranged on the ceiling element, wherein a mirror (103) is arranged in a viewing area of the image sensor (101), wherein the mirror (103) is aligned with the image sensor (101) such that a face of the person within the access area is capturable via the mirror (103) by the image sensor (101), wherein an identification device is provided, which is configured to compare the facial image of the person with a reference facial image of the person in order to identify the person, wherein a holding element is provided, which is a counter on which the mirror (103) is arranged, wherein the image sensor (101) is attached to the ceiling element such that the image sensor (101) is aligned from above to the holding element, wherein the mirror (103) is attached at the height of the holding element, via which mirror (103) the beam path of the image sensor (101) is redirected such that the face of the person is capturable, the access control method (200) comprising:
capturing (201) the facial image of the person within the access area by the image sensor (101),
comparing the facial image of the person with a reference facial image of the person by the identification device to identify the person.

## Revendications

1. Système de contrôle d'accès (100) pour capturer une image faciale d'une personne au sein d'une zone d'accès délimitée par un élément de plafond, le système de contrôle d'accès (100) comprenant :
un capteur d'image (101), qui est disposé sur l'élément de plafond ; et
un miroir (103), qui est disposé dans une zone de visualisation du capteur d'image (101), le miroir (103) étant aligné avec le capteur d'image (101) de telle sorte qu'un visage de la personne dans la zone d'accès puisse être capturé via le miroir (103) par le capteur d'image (101) ;
dans lequel le capteur d'image (101) est configuré pour capturer l'image faciale de la personne dans la zone d'accès,
un dispositif d'identification, qui est configuré pour comparer l'image faciale de la personne avec une image faciale de référence de la personne afin d'identifier la personne, et
un élément de maintien, qui est un comptoir sur lequel est disposé le miroir (103),
le capteur d'images (101) étant fixé à l'élément de plafond de telle sorte que le capteur d'images (101) soit orienté par le haut vers l'élément de maintien, le miroir (103) étant fixé à la hauteur de l'élément de maintien, par lequel le miroir (103) le trajet du faisceau du capteur d'image (101) est redirigé de telle sorte que le visage de la personne puisse être capturé.

2. Système de contrôle d'accès (100) selon la revendication 1, dans lequel le miroir (103) a une forme de miroir plan.

3. Système de contrôle d'accès (100) selon la revendication 1, dans lequel le miroir (103) a une forme de miroir convexe.

4. Système de contrôle d'accès (100) selon la revendication 3, dans lequel le miroir (103) a une forme de miroir cylindrique convexe.

5. Système de contrôle d'accès (100) selon l'une des revendications 3 ou 4, comprenant un dispositif de rectification, qui est configuré pour rectifier optiquement l'image faciale capturée de la personne.

6. Système de contrôle d'accès (100) selon l'une des revendications précédentes, dans lequel le capteur d'image (101) comprend un élément optique, dans lequel l'élément optique est configuré pour focaliser la zone de visualisation du capteur d'image (101) sur le miroir (100). 103).

7. Système de contrôle d'accès (100) selon la revendication 6, dans lequel l'élément optique comprend une lentille ou un objectif.

8. Système de contrôle d'accès (100) selon l'une des revendications précédentes, comprenant :
un miroir partiellement transparent, qui est disposé entre le capteur d'images (101) et le miroir (103).

9. Système de contrôle d'accès (100) selon l'une des revendications précédentes, dans lequel un axe perpendiculaire de l'élément de plafond et un axe optique du capteur d'image (101) sont parallèles l'un à l'autre.

10. Système de contrôle d'accès (100) selon l'une des revendications précédentes, comprenant :
un dispositif de déclenchement qui est configuré pour détecter une direction de regard de la personne, notamment sur la base d'une détection de motif, et pour déclencher une capture de l'image du visage par le capteur d'image (101) lorsque la direction de regard de la personne la personne est dirigée vers le miroir (103).

11. Système de contrôle d'accès (100) selon l'une des revendications précédentes, comprenant :
un dispositif de détection de position, qui est configuré pour détecter une position de la personne, en particulier le visage de la personne, à l'intérieur de la zone d'accès ; et
un dispositif de réglage, qui est configuré pour ajuster une orientation du miroir (103) en fonction de la position détectée de telle sorte que le visage de la personne puisse être capturé par le capteur d'image (101).

12. Système de contrôle d'accès (100) selon l'une des revendications précédentes, comprenant :
un générateur de signal, qui est configuré pour émettre un signal optique ou un signal acoustique en direction de la personne.

13. Procédé de contrôle d'accès (200) pour capturer une image faciale d'une personne dans une zone d'accès délimitée par un élément de plafond, dans lequel un capteur d'image (101) est disposé sur l'élément de plafond, dans lequel un miroir (103) est disposé dans une zone de visualisation du capteur d'image (101), le miroir (103) étant aligné avec le capteur d'image (101) de telle sorte qu'un visage de la personne dans la zone d'accès puisse être capturé via le miroir (103) par l'image capteur (101), dans lequel est prévu un dispositif d'identification qui est configuré pour comparer l'image faciale de la personne avec une image faciale de référence de la personne afin d'identifier la personne, dans lequel est prévu un élément de maintien qui est un compteur sur dans lequel est disposé le miroir (103), le capteur d'image (101) étant fixé à l'élément de plafond de telle sorte que le capteur d'image (101) soit orienté par le haut vers l'élément de maintien, le miroir (103) étant fixé à la hauteur de l'élément de maintien, via lequel le miroir (103) redirige le trajet du faisceau du capteur d'images (101) de telle sorte que le visage de la personne puisse être capturé, le procédé de contrôle d'accès (200) comprenant :
capturer (201) l'image faciale de la personne dans la zone d'accès par le capteur d'image (101),
comparer l'image faciale de la personne avec une image faciale de référence de la personne par le dispositif d'identification pour identifier la personne.
